# EUROPÄISCHE PATENTSCHRIFT

(11) **EP 3 263 920 B1**
(45) Veröffentlichungstag und Bekanntmachung des Hinweises auf die Patenterteilung: **30.10.2019**
(21) Anmeldenummer: 16205665.9
(22) Anmeldetag: 21.12.2016
(51) Int. Cl.: F16B 15/06, F16B 19/14

(54) **VERBINDUNGSELEMENT UND VERFAHREN ZUM VERBINDEN MINDESTENS ZWEIER WERKSTÜCKE**
JOINING ELEMENT AND METHOD FOR JOINING AT LEAST TWO WORKPIECES
ÉLÉMENT DE LIAISON ET PROCÉDÉ DE LIAISON ENTRE AU MOINS DEUX PIÈCES

(30) Priorität: 27.06.2016 DE 102016211444
(43) Veröffentlichungstag der Anmeldung: 03.01.2018
(73) Patentinhaber: Arnold Umformtechnik GmbH & Co. KG, 74670 Forchtenberg-Ernsbach (DE)
(72) Erfinder: Fröhlich, Dominik, 74639 Zweiflingen (DE); Miller, Heiko, 74613 Öhringen (DE)
(74) Vertreter: Patentanwälte Ruff, Wilhelm, Beier, Dauster & Partner mbB

(56) Entgegenhaltungen:
- DE-A1-102006 002 238
- DE-A1-102011 009 599
- DE-A1-102013 215 941
- US-A- 3 977 142

## Beschreibung

Die Erfindung betrifft ein Verbindungselement zur Verbindung mindestens zweier Werkstücke miteinander mit einem Schaft, einem radial über die Außenseite des Schafts hinausragenden Verbindungselementkopf an dem einen Ende des Schafts und einer Drehantriebsausbildung an dem Verbindungselementkopf, wobei in einem von der Unterseite des Verbindungselementkopfs ausgehenden Halteabschnitt des Schafts an diesem mindestens ein Paar geschlossener Ringvorsprünge angeordnet ist, von denen mindestens ein Ringvorsprung nicht vollständig in einer senkrecht zur Längsachse des Schafts verlaufenden Ebene angeordnet ist und der Abstand zwischen den beiden Ringvorsprüngen des Paares längs des Umfangs unterschiedlich groß ist oder beide Ringvorsprünge des Paars von Ringvorsprüngen parallel zueinander angeordnet sind, wobei ein vorderes Ende des Schafts als sich verjüngender Lochformabschnitt ausgebildet ist.

Ein solches Verbindungselement ist aus der internationalen Offenlegungsschrift WO 2015/022124 A1 bekannt.

Mit der Erfindung soll ein Verbindungselement und ein Verfahren zum Verbinden mindestens zweier Werkstücke verbessert werden.

Erfindungsgemäß ist hierzu ein Verbindungselement zur Verbindung mindestens zweier Werkstücke miteinander mit einem Schaft, einem radial über die Außenseite des Schafts hinausragenden Verbindungselementkopf an dem einen Ende des Schafts und einer Drehantriebsausbildung an dem Verbindungselementkopf vorgesehen, wobei in einem von der Unterseite des Verbindungselementkopfs ausgehenden Halteabschnitt des Schafts an diesem mindestens ein Paar geschlossener Ringvorsprünge angeordnet ist, von denen mindestens ein Ringvorsprung nicht vollständig in einer senkrecht zur Längsachse des Schafts verlaufenden Ebene angeordnet ist und wobei der Abstand zwischen den beiden Ringvorsprüngen des Paares längs des Umfangs unterschiedlich groß ist oder beide Ringvorsprünge des Paars von Ringvorsprüngen parallel zueinander angeordnet sind, wobei das vordere Ende des Schafts als sich verjüngender Lochformabschnitt ausgebildet ist und wobei ein maximaler Außendurchmesser des Lochformabschnitts zwischen 3% und 10% kleiner ist, insbesondere 5% kleiner ist, als ein maximaler Außendurchmesser der Ringvorsprünge.

Überraschenderweise hat sich gezeigt, dass eine solche Bemessung des maximalen Außendurchmessers des Lochformabschnitts besonders gute Ergebnisse beim Verbinden mindestens zweier Werkstücke ergibt. Nach dem Lochformen durch den Lochformabschnitt ist das entstandene Loch dadurch etwas kleiner als der Außendurchmesser des Schafts im Bereich der Ringvorsprünge. Speziell ist der Durchmesser des mittels des Lochformabschnitts geformten Lochs etwa zwischen 3% und 10% kleiner als der Außendurchmesser. Dadurch muss der Halteabschnitt zwar unter axialen Druck in das entstandene Loch eingedrückt werden, es wird aber auch ein guter Halt der Ringvorsprünge in dem geformten Loch erzielt. Dabei ist zu berücksichtigen, dass nach dem Formen des Lochs mittels des Lochformabschnitts das Material, das das geformte Loch umgibt, sehr heiß und sogar mindestens teilweise geschmolzen bzw. zumindest in einem teigigen Zustand ist. Der Halteabschnitt mit den Ringvorsprüngen kann dadurch mit geringer axialer Kraft eingedrückt werden. Die axiale Kraft kann dabei so gering gewählt werden, dass keine Gefahr besteht, dass sich die aufeinandergelegten Werkstücke durchbiegen bzw. verformen. Es können dadurch auch Leichtmetallbleche mit dem erfindungsgemäßen Verbindungselement miteinander verbunden werden, ohne dass größere Verformungen der Leichtmetallbleche zu befürchten wären. Dies ist ein entscheidender Vorteil des erfindungsgemäßen Verbindungselements gegenüber beispielsweise einem Nagel, der lediglich axial durch die zu verbindenden Werkstücke hindurchgeschossen wird. Nachdem der Halteabschnitt in das mittels des Lochformabschnitts geformte Loch eingedrückt wurde, kann das das Loch umgebende Material in die Zwischenräume zwischen den Ringvorsprüngen einfließen, zumindest aber zieht sich das Loch beim Abkühlen zusammen und sorgt für eine sichere Verankerung der Ringvorsprünge. Da der Abstand zwischen den beiden Ringvorsprüngen des Paars längs des Umfangs unterschiedlich groß ist oder beide Ringvorsprünge des Paars von Ringvorsprüngen parallel zueinander und wenigstens abschnittsweise schräg zur Längsachse angeordnet sind, kann durch eine Verdrehung des Verbindungselements nach dem vollständigen Einschieben in das geformte Loch eine Verriegelung des Verbindungselements erzielt werden. Dadurch wird ein Widerstand gegenüber Herausdrehen des Verbindungselements erhöht und es kann sogar noch eine Vorspannung zwischen den beiden Werkstücken erzielt werden. Gegenüber fließlochformenden Schrauben können erheblich kürzere Verbindungszeiten erzielt werden.

In Weiterbildung der Erfindung ist der maximale Außendurchmesser des Lochformabschnitts größer als ein Kerndurchmesser des Schafts zwischen den Ringvorsprüngen.

Der Durchmesser des mittels des Lochformabschnitts geformten Lochs liegt also zwischen dem Kerndurchmesser des Schafts zwischen den Ringvorsprüngen und dem Außendurchmesser der Ringvorsprünge. Dadurch kann ein guter Halt der Ringvorsprünge in dem geformten Loch erzielt werden und es wird auch ermöglicht, dass das erhitzte Material, dass das Loch umgibt, zwischen die Ringvorsprünge fließt oder sich zumindest das Loch beim Abkühlen so stark zusammenzieht, dass ein sicherer Halt der Ringvorsprünge und damit des Verbindungselements erreicht ist.

In Weiterbildung der Erfindung ist zwischen dem kopfseitigen Ende des Lochformabschnitts und dem Beginn des Halteabschnitts ein Beschleunigungsbereich mit konstantem Außendurchmesser angeordnet, wobei der Außendurchmesser des Beschleunigungsbereichs kleiner ist als der maximale Außendurchmesser des Lochformabschnitts.

Mittels eines solchen Beschleunigungsbereichs wird erreicht, dass der Bolzen relativ zu den beiden Werkstücken nach dem Formen des Lochs mittels des Lochformabschnitts in axialer Richtung in Folge des auf ihn ausgeübten axialen Drucks beschleunigt. Wenn der Halteabschnitt mit den Ringvorsprüngen dann in Kontakt mit der Wandung des geformten Lochs kommt, ist der Bolzen dann bereits so schnell bzw. weist einen so großen Impuls auf, dass der Halteabschnitt mit den Ringvorsprüngen sehr schnell in das geformte Loch eingedrückt werden kann, bis die Unterseite des Verbindungselementkopfs auf der Oberseite des oberen Werkstücks aufliegt.

In Weiterbildung der Erfindung ist der Außendurchmesser des Beschleunigungsbereichs größer als oder gleich groß wie der Kerndurchmesser des Schafts zwischen den Ringvorsprüngen.

Entscheidend ist in Bezug auf den Außendurchmesser des Beschleunigungsbereichs, dass der Beschleunigungsbereich kleiner ist als der Innendurchmesser des mittels des Lochformabschnitts geformten Lochs. Beim axialen Eindrücken, ggf. in Kombination mit einer Rotation des Verbindungselements, verringert sich die Reibung zwischen dem geformten Loch und dem Verbindungselement daher stark, wenn der Beschleunigungsbereich in das Loch gelangt. Das Verbindungselement kann dem axialen Druck dadurch nachgeben und wird in das Loch hinein beschleunigt. Der Beschleunigungsbereich beginnt dabei bereits am maximalen Durchmesser des Lochformabschnitts und endet am Beginn des Halteabschnitts, also am ersten Ringvorsprung. Ausgehend von einem maximalen Durchmesser des Lochformabschnitts kann sich der Durchmesser des Schafts daher zunächst verringern, um dann in einen zylindrischen Abschnitt des Beschleunigungsbereichs überzugehen.

In Weiterbildung der Erfindung beträgt eine Länge des Beschleunigungsbereichs, insbesondere des zylindrischen Abschnitts des Beschleunigungsbereich, zwischen 20% und 50%, insbesondere 30%, der Länge des Lochformabschnitts.

Die Länge des Lochformabschnitts und auch die Länge des Beschleunigungsbereichs, insbesondere des zylindrischen Abschnitts des Beschleunigungsbereichs, sind auf die Dicke der miteinander zu verbindenden Werkstücke abgestimmt. Eine Länge des Beschleunigungsbereichs zwischen 20% und 50%, insbesondere 30%, der Länge des Lochformabschnitts sorgt für eine ausreichende Beschleunigung des Verbindungselements relativ zu den Werkstücken, um ein sehr schnelles Eindrücken des Halteabschnitts in das geformte Loch zu erzielen bis eine Unterseite des Verbindungselementkopfs auf der Oberfläche des äußeren Werkstücks aufliegt.

In Weiterbildung der Erfindung weist der Lochformabschnitt an seinem freien Ende eine abgerundete Spitze auf.

In Weiterbildung der Erfindung weist der Lochformabschnitt wenigstens im Bereich seines freien Endes einen polygonalen Querschnitt auf.

Mittels eines solchen polygonalen Querschnitts, der sich bis zur Spitze, die vorteilhafterweise abgerundet ist, durchziehen kann, werden verringerte Eindringzeiten beim Lochformen erzielt.

In Weiterbildung der Erfindung weist der polygonale Querschnitt abgerundete Ecken auf.

In Weiterbildung der Erfindung ist der polygonale Querschnitt dreieckig mit abgerundeten Ecken ausgebildet.

Mittels eines dreieckigen Querschnitts mit abgerundeten Ecken, wobei die Ecken mit konvex gewölbten Seitenkanten verbunden sein können, werden besonders gute Ergebnisse beim Lochformen erzielt.

In Weiterbildung der Erfindung weist der Beschleunigungsbereich einen kreisförmigen Querschnitt auf.

Mittels des Lochformabschnitts wird, auch wenn der Querschnitt des Lochformabschnitts polygonal ist, ein kreisrundes Loch erzeugt. Wenn sich der Beschleunigungsbereich innerhalb des Lochs befindet, soll die Reibung zwischen dem Verbindungselement und der Wand des Lochs so weit wie möglich verringert werden, um eben das Verbindungselement relativ zu den Werkstücken und damit auch relativ zum Loch zu beschleunigen. Um dies zu erreichen, ist ein kreisförmiger Querschnitt des Beschleunigungsbereichs gut geeignet, da die Außenwand des Beschleunigungsbereichs dann ringsum gleichmäßig von der Wand des Lochs beabstandet ist.

In Weiterbildung der Erfindung weist der Halteabschnitt einen kreisförmigen Querschnitt auf.

Der Halteabschnitt ist dafür vorgesehen, sich mit seinen Ringvorsprüngen mit der Wand des durch den Lochformabschnitt geformten Lochs zu verzahnen. Auch hier ist ein kreisförmiger Querschnitt des Halteabschnitts vorteilhaft, zumindest der Außenumfang des Halteabschnitts ist vorteilhafterweise kreisförmig.

Das der Erfindung zugrunde liegende Problem wird auch durch ein Verfahren zum Verbinden mindestens zweier Werkstücke gelöst, bei dem die Werkstücke aufeinandergelegt werden und ein erfindungsgemäßes Verbindungselement in Rotation versetzt und auf ein äußeres der Werkstücke aufgesetzt wird, wobei axialer Druck auf das Verbindungselement ausgeübt wird, bis eine Unterseite des Verbindungselementkopfs auf der dem Verbindungselementkopf zugewandten Oberfläche des äußeren Bauteils aufliegt.

Indem das Verbindungselement in Rotation versetzt und auf ein äußeres der Werkstücke aufgesetzt wird, gelangt das freie Ende des Lochformabschnitts in Kontakt mit dem äußeren Werkstück. Durch die Rotation des Lochformabschnitts wird das Werkstück lokal stark erwärmt und der Lochformabschnitt formt ein Loch mit einem Durchzug in den beiden Werkstücken. Hierzu ist neben einer Rotation des Lochformabschnitts auch ein axialer Druck auf das Verbindungselement erforderlich. Der axiale Druck wird aufrechterhalten, bis die Unterseite des Verbindungselementkopfs auf der dem Verbindungselementkopf zugewandten Oberfläche des äußeren Bauteils aufliegt. Hier liegt ein wesentlicher Unterschied zu einer fließlochformenden Schraube. Bei einer fließlochformenden Schraube, die im Halteabschnitt mit einem Gewinde versehen ist, ist kein axialer Druck mehr nötig, sobald das Gewinde, in der Regel ein Furchgewinde, in die Wand des Lochs eingreift, das mittels des Lochformabschnitts geformt wurde. Durch einfache Rotation der fließlochformenden Schraube wird diese über das Gewinde dann in das Loch gezogen, bis die Unterseite des Schraubenkopfs aufliegt. Bei dem erfindungsgemäßen Verfahren und dem erfindungsgemäßen Verbindungselement ist im Halteabschnitt kein Gewinde vorgesehen, so dass ein axialer Druck aufrechterhalten werden muss, um das Verbindungselement in das mittels des Lochformabschnitts geformte Loch einzupressen. Bei dem erfindungsgemäßen Verfahren kann dabei dieses axiale Einpressen bei fortgesetzter Rotation des Verbindungselements erfolgen. Mit dem erfindungsgemäßen Verbindungselement und dem erfindungsgemäßen Verfahren können gegenüber fließlochformenden Schrauben erhebliche Verringerungen der für die Verbindung benötigten Zeit erzielt werden.

In Weiterbildung der Erfindung rotiert das Verbindungselement nach dem Aufsetzen der Unterseite des Verbindungselementkopfs auf der Oberfläche des äußeren Bauelements weiter.

Überraschenderweise hat sich herausgestellt, dass auch dann, nachdem der Kopf des Verbindungselements auf dem äußeren Werkstück aufliegt, eine weitere Rotation des Verbindungselements die Haltekraft des Verbindungselements nicht verschlechtert. Insbesondere tritt das Ausreißen der Lochwand nicht auf, das bei einer fließlochformenden Schraube immer auftritt, wenn nach dem Aufliegen des Schraubenkopfs auf dem äußeren Werkstück die Rotation nicht gestoppt wird.

In Weiterbildung der Erfindung ist ein Drehwinkel der Rotationsbewegung des Verbindungselements nach dem Aufsetzen der Unterseite des Verbindungselementkopfs auf das äußere Bauteil größer als 360°.

Nach dem Aufsetzen der Unterseite des Verbindungselementkopfs erfolgt infolgedessen nicht nur eine einfache Verriegelung des Verbindungselements in den Werkstücken. Für eine solche Verriegelung wäre lediglich eine Drehung von weniger als 360° erforderlich. Überraschenderweise hat sich herausgestellt, dass auch Drehwinkel von mehr als 360° nach dem Aufsetzen des Verbindungselementkopfs eine sehr gute Haltekraft des Verbindungselements bewirken. Die Wand des mittels des Lochformabschnitts geformten Lochs bzw. das diese Wand bildende Material ist sehr stark erhitzt und kann in die Zwischenräume zwischen den Ringvorsprüngen fließen bzw. ist in einem teigigen Zustand und kann sich zwischen die Ringvorsprünge bewegen. Dies wird durch das Weiterdrehen des Verbindungselements nach dem Aufsetzen des Verbindungselementkopfs auf das äußere Bauteil unterstützt. Die starke Erhitzung des Materials, aus dem die Wand des geformten Lochs gebildet ist, führt auch dazu, dass sich das Loch beim Abkühlen zusammenzieht. Auch dadurch wird eine Verriegelung bzw. Blockierung des Halteabschnitts des Verbindungselements in dem geformten Loch begünstigt.

In Weiterbildung der Erfindung wird das Verbindungselement nach dem Aufsetzen der Unterseite des Verbindungselementkopfs auf das äußere Werkstück nicht mehr zu einer Rotationsbewegung angetrieben, bis die Rotation des Verbindungselements bis zum Stillstand abgebremst ist.

Der Drehantrieb des Verbindungselements kann somit nach dem Aufsetzen des Verbindungselementkopfs abgestellt werden und es kann dann einfach abgewartet werden, bis das Verbindungselement durch Reibung zum Stillstand abgebremst ist.

In Weiterbildung der Erfindung wird das Verbindungselement nach dem Aufsetzen der Unterseite des Verbindungselementkopfs auf dem äußeren Bauteil um einen vordefinierten Winkel weitergedreht.

Auf diese Weise kann eine definierte Drehbewegung nach dem Aufsetzen erfolgen, wobei die Drehbewegung durchaus Drehwinkel von mehr als 360° aufweisen kann.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1:: eine Seitenansicht eines erfindungsgemäßen Verbindungselements,
- Fig. 2: eine Schnittansicht des Verbindungselements der Fig. 1 parallel zur Längsachse,
- Fig. 3: eine Schnittansicht des Beschleunigungsbereichs des Verbindungselements der Fig. 1 senkrecht zur Längsachse,
- Fig. 4: eine Schnittansicht des Lochformbereiches des Verbindungselements der Fig. 1 senkrecht zur Längsachse,
- Fig. 5: eine abschnittsweise vergrößerte Darstellung des Verbindungselements der Fig. 1,
- Fig. 6: eine weitere abschnittsweise vergrößerte Darstellung des Verbindungselements der Fig. 1,
- Fig. 7 bis 10: verschiedene Stadien beim Verbinden zweier Werkstücke mit einem erfindungsgemäßen Verbindungselement.

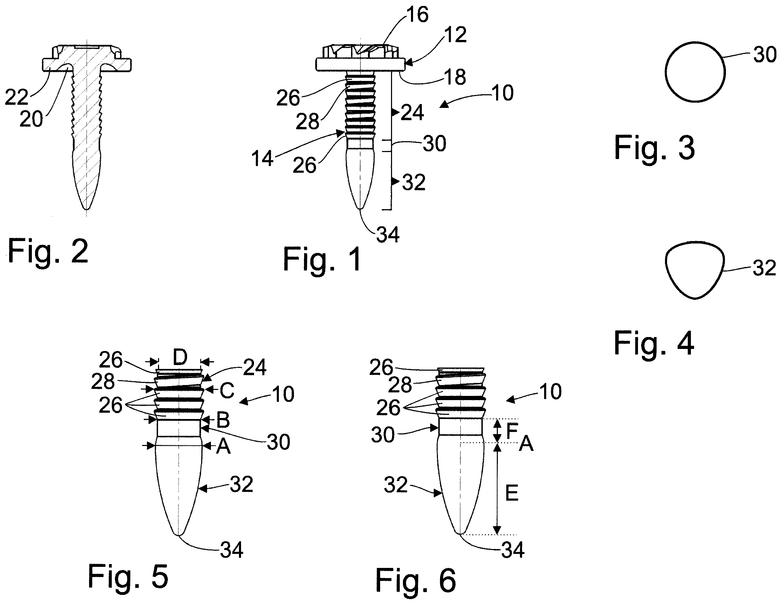

Die Darstellung der Fig. 1 zeigt ein erfindungsgemäßes Verbindungselement 10 gemäß einer bevorzugten Ausführungsform der Erfindung. Das Verbindungselement 10 weist einen Verbindungselementkopf 12 und einen Schaft 14 auf. Der Verbindungselementkopf ist auf seiner Oberseite mit einer Antriebsausbildung 16 versehen. Eine Unterseite 18 des Verbindungselementkopfs 12 ist mit einer umlaufenden Ringnut 20 versehen, siehe Fig. 2, die dafür vorgesehen ist, dann, wenn die Unterseite 18 des Verbindungselements 10 auf einem äußeren Werkstück aufliegt, einen Materialaufwurf des äußeren Werkstücks aufzunehmen. In radialer Richtung nach außen schließt sich an die Ringnut 20 eine ebene Ringfläche 22 an, die senkrecht zu einer Mittellängsachse des Verbindungselements 10 angeordnet ist. Die Antriebsausbildung 16 erlaubt das Antreiben des Verbindungselements 10 nur in einer Drehrichtung und das Aufbringen eines axialen Drucks auf den Verbindungselementkopf 12, in Fig. 1 nach unten.

In Fig. 1 sind die wesentlichen Bereiche des Schafts 14 mittels eckiger Klammern markiert. Ausgehend von der Unterseite 18 des Verbindungselementkopfs 12 ist zunächst ein Halteabschnitt 24 mit mehreren Ringvorsprüngen 26, 28 angeordnet. Auf den Halteabschnitt 24 folgt ein Beschleunigungsbereich 30, der einen zylindrischen Abschnitt aufweist und, wie die Länge der eckigen Klammer anzeigt, von dem Ringvorsprung 26, der am weitesten von der Unterseite 18 des Verbindungselementkopfs 12 entfernt ist, bis zum Beginn eines Lochformabschnitts 32 geht. Der Beschleunigungsbereich weist dadurch auch noch einen sich erweiternden Bereich auf, in dem der Außendurchmesser des Beschleunigungsbereichs 30 von dem konstanten Außendurchmesser im zylindrischen Bereich bis zum maximalen Außendurchmesser des Lochformabschnitts 32 anwächst.

Der Lochformabschnitt 32 verjüngt sich in Richtung auf das freie Ende des Schafts 14 hin und endet an einer abgerundeten Spitze 34.

Fig. 4 zeigt einen senkrecht zur Mittellängsachse des Verbindungselements 10 verlaufenden Schnitt durch den Lochformabschnitt 32. Es ist zu erkennen, dass der Lochformabschnitt 32 einen polygonalen Querschnitt in Form eines Dreiecks mit abgerundeten Ecken aufweist. Die abgerundeten Ecken sind jeweils mittels schwach konvex gekrümmter Seitenkanten miteinander verbunden. Der Lochformabschnitt 32 hat über seine gesamte Länge bis zur Spitze 34 einen solchen polygonalen Querschnitt.

Fig. 3 zeigt einen Querschnitt des Verbindungselements 10 senkrecht zur Mittellängsachse im zylindrischen Abschnitt des Beschleunigungsbereichs 30. Im zylindrischen Beschleunigungsbereich 30 weist das Verbindungselement 10 einen kreisförmigen Querschnitt auf.

Auch im Halteabschnitt 24 ist ein Querschnitt des Schafts 14 kreisförmig.

Die vergrößerte Ansicht der Fig. 5 zeigt lediglich den Lochformabschnitt 32, den Beschleunigungsbereich 30 und einen Teil des Halteabschnitts 24 in vergrößerter Darstellung.

Ein maximaler Außendurchmesser des Lochformabschnitts 32 liegt am kopfseitigen Ende des Lochformabschnitts 32 und ist mit dem Bezugszeichen A bezeichnet. Ein Durchmesser im zylindrischen Bereich des Beschleunigungsbereichs 30 ist mit B bezeichnet. Ein maximaler Außendurchmesser der Ringvorsprünge 26, 28 ist mit C bezeichnet. Der Außendurchmesser der Ringvorsprünge 26, 28 ist gleich, so dass der Halteabschnitt 24 eine zylindrische Hüllkurve aufweist. Ein Kerndurchmesser des Halteabschnitts 24 ist mit E bezeichnet.

In der vergrößerten Darstellung der Fig. 5 ist zu erkennen, dass immer zwei Ringvorsprünge 26, 28 ein Paar bilden. Der Außendurchmesser des Ringvorsprungs 28 ist zwar gleich groß wie der Außendurchmesser des Ringvorsprungs 26. Allerdings ist ein Abstand in Längsrichtung des Verbindungselements 10 zwischen den beiden Ringvorsprüngen 26, 28 längs des Umfangs unterschiedlich groß und wächst in der Darstellung der Fig. 5 von rechts nach links an bzw. fällt von links nach rechts ab. Der Ringvorsprung 28 ist demzufolge schräg zu einer Längsachse des Verbindungselements 10 angeordnet, wohingegen der Ringvorsprung 26 senkrecht zur Längsachse verläuft.

Alternativ können die Ringvorsprünge 26, 28 in nicht dargestellter Weise auch parallel zueinander angeordnet sein, wobei dann beide Ringvorsprünge nicht vollständig in einer senkrecht zur Längsachse des Schafts verlaufenden Ebene angeordnet sind, also beispielsweise schräg zur Längsachse.

In Bezug auf eine mögliche Ausgestaltung der Ringvorsprünge 26, 28 wird auf die internationale Offenlegungsschrift WO 2015/022124 A1 desselben Anmelders verwiesen, deren Offenbarungsgehalt hiermit vollumfänglich durch Bezugnahme eingeschlossen wird. So können die Ringvorsprünge lediglich abschnittsweise schräg zur Längsachse verlaufen.

Vor dem Beginn des Beschleunigungsbereichs 30 sind in Längsrichtung gesehen drei Ringvorsprünge 26 hintereinander angeordnet, die alle parallel zueinander verlaufen.

In der Fig. 1 ist zu erkennen, dass im Halteabschnitt 24 insgesamt drei Paare von Ringvorsprüngen 26, 28 hintereinander angeordnet sind. Dann folgen drei senkrecht zur Längsachse verlaufende Ringvorsprünge 26, bevor dann der Beschleunigungsbereich 30 beginnt.

Nach dem letzten Ringvorsprung 26 beginnt der zylindrische Abschnitt des Beschleunigungsbereichs 30. Der zylindrische Abschnitt hat den Außendurchmesser B. Nach dem Ende des zylindrischen Abschnitts steigt der Außendurchmesser des Beschleunigungsbereichs 30 an, bis der Beschleunigungsbereich 30 am maximalen Durchmesser A in den Lochformabschnitt 32 übergeht. Der Lochformabschnitt 32 verjüngt sich dann kontinuierlich bis zur abgerundeten Spitze 34.

Der maximale Durchmesser A des Lochformabschnitts 32 ist bei der dargestellten Ausführungsform 5% kleiner als der maximale Außendurchmesser C der Ringvorsprünge 26, 28. Im Rahmen der Erfindung kann der maximale Außendurchmesser A zwischen 3% und 10% kleiner sein als der maximale Außendurchmesser C.

Der Außendurchmesser B im zylindrischen Abschnitt des Beschleunigungsbereichs 30 entspricht bei der dargestellten Ausführungsform dem Kerndurchmesser D des Schafts 14 im Halteabschnitt 24. Der maximale Außendurchmesser A des Lochformabschnitts 32 ist größer als der Durchmesser B im zylindrischen Abschnitt des Beschleunigungsbereichs 30 und auch größer als der Kerndurchmesser D des Halteabschnitts 24. Der maximale Außendurchmesser des Lochformabschnitts 32 und damit auch der Durchmesser des in den aufeinanderliegenden Werkstücken hergestellten Lochs liegt also zwischen dem Außendurchmesser C der Ringvorsprünge 26, 28 und dem Kerndurchmesser D des Halteabschnitts beziehungsweise dem Außendurchmesser B des zylindrischen Abschnitts des Beschleunigungsbereichs 30.

Die Darstellung der Fig. 6 zeigt den bereits in Fig. 5 dargestellten Abschnitt des Verbindungselements 10 der Fig. 1. Fig. 6 wird zur Darstellung der Längenverhältnisse zwischen Lochformabschnitt 32 und Beschleunigungsbereich 30 herangezogen. Der Lochformabschnitt 32 weist von der abgerundeten Spitze 34 bis zum maximalen Durchmesser A eine Länge E auf. Der Beschleunigungsbereich 30 weist vom maximalen Durchmesser A des Lochformbereichs 32, der gleichzeitig das Ende des Lochformbereichs 32 bildet, bis zum Fuß des ersten Ringvorsprungs 26 eine Länge F auf. Bei dem erfindungsgemäßen Verbindungselement beträgt die Länge F des Beschleunigungsbereichs 30 zwischen 20% und 50% der Länge E des Lochformabschnitts 32. Bei der dargestellten Ausführungsform beträgt die Länge F des Beschleunigungsbereichs 30 etwa 30% der Länge E des Lochformabschnitts 32.

Es hat sich herausgestellt, dass die anhand der Fig. 6 beschriebenen Längenverhältnisse und die anhand der Fig. 5 beschriebenen Durchmesserverhältnisse hervorragende Ergebnisse beim Verbinden zweier Werkstücke mit dem erfindungsgemäßen Verbindungselement ergeben. Speziell können sehr geringe Taktzeiten beim Lochformen und auch beim axialen Eindrücken des Halteabschnitts 24 erzielt werden. Insgesamt können gegenüber fließlochformenden Schrauben oder sonstigen Verbindungselementen Taktzeitverringerungen von bis zu 50% erzielt werden. Die erfindungsgemäßen Verbindungselemente 10 und das erfindungsgemäße Verfahren werden beispielsweise bei der Verbindung von Aluminiumblechen mit Stahlblechen oder auch bei der Verbindung von zwei Aluminiumblechen verwendet. Die Verbindungselemente 10 können dabei auch nur dazu dienen, beim Verkleben von zwei Werkstücken die Werkstücke aneinanderzupressen, bis der Klebstoff abgebunden hat.

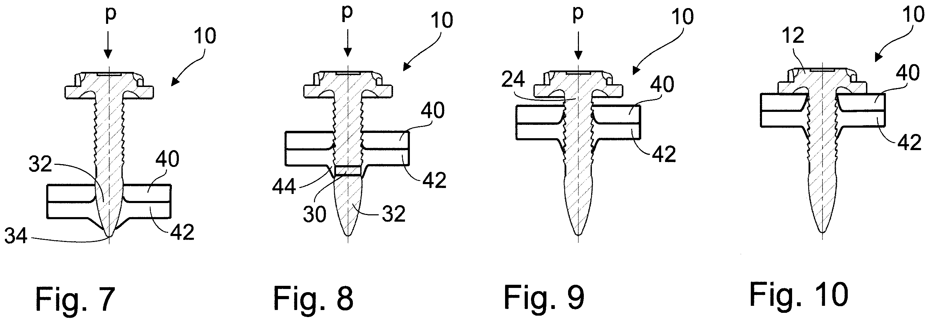

Die Darstellungen der Fig. 7 bis 10 zeigen verschiedene Verfahrensabschnitte beim Durchführen des erfindungsgemäßen Verfahrens. Die Darstellung des Verbindungselements 10 ist dabei jeweils schematisch. Auch wird darauf hingewiesen, dass die beiden miteinander zu verbindenden Werkstücke 40, 42 während des Verbindungsvorgangs unbeweglich und auf gleicher Höhe bleiben, anders als dies die Anordnung der Fig. 7 bis 10 vermuten lässt.

Fig. 7 zeigt ein Stadium in dem erfindungsgemäßen Verfahren, in dem das in Rotation versetzte Verbindungselement 10, das zusätzlich mit einem axialen Druck P in Richtung auf die beiden Werkstücke 40, 42 beaufschlagt wird, bereits mit der Spitze 34 des Lochformabschnitts 32 die beiden Werkstücke 40, 42 durchdrungen hat. Der maximale Durchmesser A des Lochformbereichs 32 liegt in Fig. 7 etwa auf Höhe der Oberfläche des äußeren Werkstücks 40.

Das Verbindungselement 10 wird dann, siehe Fig. 8, weitergedreht und weiter mit einem Axialdruck P beaufschlagt. Der Axialdruck P muss dabei über die Zeit gesehen nicht konstant sein. Der Lochformabschnitt 32 hat nun im unteren Werkstück 42 ein Loch und einen Durchzug 44 geformt. Der Beschleunigungsbereich 30 befindet sich nun im Bereich des Lochs bzw. des Durchzugs 44. Der gegenüber dem maximalen Außendurchmesser A am Ende des Lochformbereichs 32 verringerte Durchmesser B im Beschleunigungsbereich 30 führt dazu, dass das Verbindungselement 10 dem axialen Druck P stärker nachgeben kann und daher in Richtung auf die beiden Werkstücke 40, 42 zu beschleunigt wird.

Dies erleichtert das axiale Einpressen des Verbindungselements 10 in das mittels des Lochformabschnitts 32 ausgebildete Loch in den Werkstücken 40, 42. Der weiter aufrechterhaltene axiale Druck P und die ebenfalls weiter aufrechterhaltene Rotation führen dazu, dass der Halteabschnitt 24 mit seinen Ringvorsprüngen in das in den Werkstücken 40, 42 gebildete Loch eindringt, siehe Fig. 9.

Das Eindringen in die beiden Werkstücke 40, 42 erfolgt so lange bis, siehe Fig. 10, die Unterseite des Verbindungselementkopfs 12 auf der dem Kopf zugewandten Oberfläche des äußeren Werkstücks 40 aufliegt. In der Position der Fig. 10 erfolgt gemäß dem erfindungsgemäßen Verfahren eine weitere Drehung des Verbindungselements 10. Diese Drehung kann nach dem Aufsetzen der Unterseite des Verbindungselementkopfs 12 über einen Winkel von mehr als 360° erfolgen. Es liegt dabei im Rahmen der Erfindung, einen Rotationsantrieb des Verbindungselements 12, der in den Fig. 7 bis 10 nicht dargestellt ist, abzuschalten oder das Verbindungselement 10 weiter anzutreiben. Während das Verbindungselement 10 in der Position der Fig. 10 weiterdreht, kann das Material, das das Loch in den Werkstücken 40, 42 bildet, zwischen die Ringvorsprünge 26, 28 des Halteabschnitts 24 fließen bzw. sich in die Zwischenräume zwischen den Ringvorsprüngen 26, 28 hineinbewegen. Dies kann durch eine tatsächliche Fließbewegung des erhitzten Materials erfolgen. Aber alleine auch dadurch, dass das Material, welches das Loch in den Werkstücken 40, 42 bildet, abkühlt, verringert sich der Durchmesser des Lochs und es erfolgt eine Verzahnung der Wand des Lochs mit den Ringvorsprüngen 26, 28 des Halteabschnitts 24.

Mit dem erfindungsgemäßen Verbindungselement 10 und mit dem beschriebenen erfindungsgemäßen Verfahren können dadurch äußerst kurze Taktzeiten beim Verbinden der beiden Werkstücke 40, 42 erzielt werden. Wie ausgeführt wurde, können die einander zugewandten Oberflächen der Werkstücke 40, 42 mit Klebstoff beschichtet sein und die Verbindungselemente 10 dienen dazu, die beiden Werkstücke 40, 42 zusätzlich aneinander zu sichern und im aneinander angepressten Zustand zu halten, bis der Klebstoff abgebunden hat.

## Patentansprüche

1. Verbindungselement (10) zur Verbindung mindestens zweier Werkstücke miteinander, mit
- einem Schaft (14),
- einem radial über die Außenseite des Schafts (14) hinausragenden Verbindungselementkopf (12) an dem einen Ende des Schafts (14),
- einer Drehantriebsausbildung (16) an dem Verbindungselementkopf (12), wobei
- in einem von der Unterseite (18) des Verbindungselementkopfs (12) ausgehenden Halteabschnitt (24) des Schafts (14) an diesem mindestens ein Paar geschlossener Ringvorsprünge (26, 28) angeordnet ist, von denen
- mindestens ein Ringvorsprung (28) nicht vollständig in einer senkrecht zur Längsachse des Schafts (14) verlaufenden Ebene angeordnet ist, und
- der Abstand zwischen den beiden Ringvorsprüngen (26, 28) des Paars längs des Umfangs unterschiedlich groß ist oder beide Ringvorsprünge des Paars von Ringvorsprüngen parallel zueinander angeordnet sind, wobei
- ein vorderes Ende des Schafts als sich verjüngender Lochformabschnitt (32) ausgebildet ist, **dadurch gekennzeichnet, dass**
- ein maximaler Außendurchmesser des Lochformabschnitts (32) zwischen 3% und 10% kleiner, insbesondere 5% kleiner, ist als ein maximaler Außendurchmesser der Ringvorsprünge (26, 28).

2. Verbindungselement nach Anspruch 1, **dadurch gekennzeichnet, dass** der maximale Außendurchmesser (A) des Lochformabschnitt (32) größer ist als ein Kerndurchmesser (D) des Schafts (14) zwischen den Ringvorsprüngen (26, 28).

3. Verbindungselement nach einem der vorstehenden Ansprüche, **dadurch gekennzeichnet, dass** zwischen dem kopfseitigen Ende des Lochformabschnitt (32) und dem Beginn des Halteabschnitts (24) ein Beschleunigungsbereich (30) mit wenigstens abschnittsweise konstantem Außendurchmesser (B) angeordnet ist, wobei dieser Außendurchmesser (B) des Beschleunigungsbereichs (30) kleiner ist als der maximale Außendurchmesser (A) des Lochformabschnitts (32).

4. Verbindungselement nach Anspruch 3, **dadurch gekennzeichnet, dass** der Außendurchmesser (B) des Beschleunigungsbereichs (30) größer ist als oder gleich groß ist wie der Kerndurchmesser (D) des Schafts (14) zwischen den Ringvorsprüngen (26, 28).

5. Verbindungselement nach Anspruch 3 oder 4, **dadurch gekennzeichnet, dass** eine Länge (F) des Beschleunigungsbereichs (30), insbesondere eine Länge des Abschnitts des Beschleunigungsbereichs (30) mit konstantem Durchmesser, zwischen 20% und 50%, insbesondere 30%, der Länge (E) des Lochformabschnitts (32) beträgt.

6. Verbindungselement nach einem der vorstehenden Ansprüche, **dadurch gekennzeichnet, dass** der Lochformabschnitt (32) an seinem freien Ende eine abgerundete Spitze (34) aufweist.

7. Verbindungselement nach wenigstens einem der vorstehenden Ansprüche, **dadurch gekennzeichnet, dass** der Lochformabschnitt (32) wenigstens im Bereich seines freien Endes einen polygonalen Querschnitt aufweist.

8. Verbindungselement nach Anspruch 7, **dadurch gekennzeichnet, dass** der polygonale Querschnitt abgerundete Ecken aufweist.

9. Verbindungselement nach Anspruch 7 oder 8, **dadurch gekennzeichnet, dass** der polygonale Querschnitt dreieckig mit abgerundeten Ecken ausgebildet ist.

10. Verbindungselement nach wenigstens einem der vorstehenden Ansprüche, **dadurch gekennzeichnet, dass** der Beschleunigungsbereich (30) einen kreisförmigen Querschnitt aufweist.

11. Verbindungselement nach wenigstens einem der vorstehenden Ansprüche, **dadurch gekennzeichnet, dass** der Halteabschnitt (24) einen kreisförmigen Querschnitt aufweist.

12. Verfahren zum Verbinden mindestens zweier Werkstücke (40, 42), bei dem die Werkstücke (40, 42) aufeinander gelegt werden und ein Verbindungselement (10) nach wenigstens einem der vorstehenden Ansprüche in Rotation versetzt und auf ein äußeres der Werkstücke (40) aufgesetzt wird, wobei axialer Druck (P) auf das Verbindungselement (10) ausgeübt wird, bis eine Unterseite (18) des Verbindungselementkopfs (12) auf der dem Verbindungselementkopf (12) zugewandten Oberfläche des äußeren Bauteils (40) aufliegt.

13. Verfahren nach Anspruch 12, **dadurch gekennzeichnet, dass** das Verbindungselement (10) nach dem Aufsetzen der Unterseite (18) des Verbindungselementkopfs (12) auf der Oberfläche des äußeren Werkstücks (40) weiter rotiert.

14. Verfahren nach Anspruch 13, **dadurch gekennzeichnet, dass** ein Drehwinkel der Rotationsbewegung des Verbindungselements (10) nach dem Aufsetzen der Unterseite (18) des Verbindungselementkopfs (12) auf das äußere Werkstück (40) größer ist als 360°.

15. Verfahren nach Anspruch 13 oder 14, **dadurch gekennzeichnet, dass** nach dem Aufsetzen der Unterseite (18) des Verbindungselementkopfs (12) das Verbindungselement (10) nicht mehr zu einer Rotationsbewegung angetrieben wird, bis die Rotation des Verbindungselements (10) bis zum Stillstand abgebremst ist.

16. Verfahren nach Anspruch 13 oder 14, **dadurch gekennzeichnet, dass** das Verbindungselement (10) nach dem Aufsetzen der Unterseite (18) des Verbindungselementkopfes (12) auf dem äußeren Werkstück (40) um einen vordefinierten Winkel weiter gedreht wird.

## Claims

1. Connection element (10) for interconnecting at least two workpieces, having
- a shaft (14);
- a connection-element head (12), radially protruding beyond the external side of the shaft (14), at the one end of the shaft (14);
- a rotational drive configuration (16) on the connection-element head (12), wherein
- in a holding portion (24) of the shaft (14) that emanates from the lower side (18) of the connection-element head (12) at least one pair of closed annular protrusions (26, 28) are disposed thereon, of which
- at least one annular protrusion (28) is not completely disposed in a plane that runs perpendicularly to the longitudinal axis of the shaft (14); and
- the spacings between the two annular protrusions (26, 28) of the pair along the circumference are of dissimilar size, or the two annular protrusions of the pair of annular protrusions are disposed so as to be mutually parallel; wherein
- a front end of the shaft is configured as a tapered hole-forming portion (32), **characterized in that**
- a maximum external diameter of the hole-forming portion (32) is between 3% and 10% smaller, in particular 5% smaller, than a maximum external diameter of the annular protrusions (26, 28).

2. Connection element according to claim 1, **characterized in that** the maximum external diameter (A) of the hole-forming portion (32) is larger than a core diameter (D) of the shaft (14) between the annular protrusions (26, 28).

3. Connection element according to any one of the preceding claims, **characterized in that** an acceleration region (30) having an at least portion-wise constant external diameter (B) is disposed between the head-side end of the hole-forming portion (32) and the commencement of the holding portion (24), wherein this external diameter (B) of the acceleration region (30) is smaller than the maximum external diameter (A) of the hole-forming portion (32).

4. Connection element according to claim 3, **characterized in that** the external diameter (B) of the acceleration region (30) is larger than or equal in size to the core diameter (D) of the shaft (14) between the annular protrusions (26, 28).

5. Connection element according to claim 3 or 4, **characterized in that** a length (F) of the acceleration region (30), in particular a length of the portion of the acceleration region (30) having a constant diameter, is between 20% and 50%, in particular 30%, of the length (E) of the hole-forming portion (32).

6. Connection element according to any one of the preceding claims, **characterized in that** the hole-forming portion (32) at the free end thereof has a rounded tip (34).

7. Connection element according to at least one of the preceding claims, **characterized in that** the hole-forming portion (32), at least in the region of the free end thereof, has a polygonal cross section.

8. Connection element according to claim 7, **characterized in that** the polygonal cross section has rounded corners.

9. Connection element according to claim 7 or 8, **characterized in that** the polygonal cross section is configured so as to be triangular, having rounded corners.

10. Connection element according to at least one of the preceding claims, **characterized in that** the acceleration region (30) has a circular cross section.

11. Connection element according to at least one of the preceding claims, **characterized in that** the holding portion (24) has a circular cross section.

12. Method for connecting at least two workpieces (40, 42), wherein the workpieces (40, 42) are placed on top of one another, and a connection element (10) according to at least one of the preceding claims is set in rotation and is placed on top of an external workpiece of the workpieces (40), wherein an axial pressure (P) is exerted on the connection element (10) until a lower side (18) of the connection-element head (12) bears on that surface of the external component (40) that faces the connection-element head (12).

13. Method according to claim 12, **characterized in that** the connection element (10), upon the placement of the lower side (18) of the connection-element head (12) on the surface of the external workpiece (40), continues to rotate.

14. Method according to claim 13, **characterized in that** a rotation angle of the rotating movement of the connection element (10), upon the placement of the lower side (18) of the connection-element head (12) on the external workpiece (40), is larger than 360°.

15. Method according to claim 13 or 14, **characterized in that**, upon the placement of the lower side (18) of the connection-element head (12), the connection element (10) is no longer driven to perform a rotating movement until the rotation of the connection element (10) is decelerated to a standstill.

16. Method according to claim 13 or 14, **characterized in that** the connection element (10), upon the placement of the lower side (18) of the connection-element head (12) on the external workpiece (40), continues to be rotated about a predefined angle.

## Revendications

1. Élément de liaison (10) pour la liaison d'au moins deux pièces l'une à l'autre, comprenant
- une tige (14),
- une tête d'élément de liaison (12) faisant saillie radialement au-delà du côté extérieur de la tige (14), à l'une des extrémités de la tige (14),
- une formation d'entraînement en rotation (16) au niveau de la tête d'élément de liaison (12), dans lequel
- au moins une paire de saillies annulaires fermées (26, 28) sont disposées sur la tige dans une partie de retenue (24) de la tige (14) partant du côté inférieur (18) de la tête d'élément de liaison (12), saillies annulaires parmi lesquelles
- au moins une saillie annulaire (28) n'est pas disposée complètement dans un plan s'étendant perpendiculairement à l'axe longitudinal de la tige (14), et
- la distance entre les deux saillies annulaires (26, 28) de la paire le long de la périphérie est différente ou les deux saillies annulaires de la paire de saillies annulaires sont disposées parallèlement l'une à l'autre, dans lequel
- une extrémité avant de la tige est réalisée sous forme de partie de formation de trou (32) se rétrécissant, **caractérisé en ce que**
- un diamètre extérieur maximal de la partie de formation de trou (32) est inférieur de 3 % à 10 %, en particulier inférieur de 5 %, à un diamètre extérieur maximal des saillies annulaires (26, 28).

2. Élément de liaison selon la revendication 1, **caractérisé en ce que** le diamètre extérieur maximal (A) de la partie de formation de trou (32) est supérieur à un diamètre de noyau (D) de la tige (14) entre les saillies annulaires (26, 28).

3. Élément de liaison selon l'une des revendications précédentes, **caractérisé en ce qu'**entre l'extrémité côté tête de la partie de formation de trou (32) et le début de la partie de retenue (24) est disposée une région d'accélération (30) présentant un diamètre extérieur (B) constant au moins dans certaines parties, ce diamètre extérieur (B) de la région d'accélération (30) étant inférieur au diamètre extérieur maximal (A) de la partie de formation de trou (32).

4. Élément de liaison selon la revendication 3, **caractérisé en ce que** le diamètre extérieur (B) de la région d'accélération (30) est supérieur ou égal au diamètre de noyau (D) de la tige (14) entre les saillies annulaires (26, 28).

5. Élément de liaison selon la revendication 3 ou 4, **caractérisé en ce qu'**une longueur (F) de la région d'accélération (30), en particulier une longueur de la partie de la région d'accélération (30) de diamètre constant, est comprise entre 20 % et 50 %, en particulier égale à 30 %, de la longueur (E) de la partie de formation de trou (32).

6. Élément de liaison selon l'une des revendications précédentes, **caractérisé en ce que** la partie de formation de trou (32) comprend une pointe arrondie (34) à son extrémité libre.

7. Élément de liaison selon au moins l'une des revendications précédentes, **caractérisé en ce que** la partie de formation de trou (32) présente une section transversale polygonale au moins dans la région de son extrémité libre.

8. Élément de liaison selon la revendication 7, **caractérisé en ce que** la section transversale polygonale présente des coins arrondis.

9. Élément de liaison selon la revendication 7 ou 8, **caractérisé en ce que** la section transversale polygonale est de forme triangulaire présentant des coins arrondis.

10. Élément de liaison selon au moins l'une des revendications précédentes, **caractérisé en ce que** la région d'accélération (30) présente une section transversale circulaire.

11. Élément de liaison selon au moins l'une des revendications précédentes, **caractérisé en ce que** la partie de retenue (24) présente une section transversale circulaire.

12. Procédé de liaison d'au moins deux pièces (40, 42), procédé selon lequel les pièces (40, 42) sont placées l'une sur l'autre et un élément de liaison (10) selon au moins l'une des revendications précédentes est mis en rotation et est placé sur une pièce extérieure des pièces (40), une pression axiale (P) étant exercée sur l'élément de liaison (10) jusqu'à ce qu'un côté inférieur (18) de la tête d'élément de liaison (12) repose sur la surface du composant extérieur (40) tournée vers la tête d'élément de liaison (12).

13. Procédé selon la revendication 12, **caractérisé en ce que** l'élément de liaison (10) continue à tourner après le placement du côté inférieur (18) de la tête d'élément de liaison (12) sur la surface de la pièce extérieure (40) .

14. Procédé selon la revendication 13, **caractérisé en ce qu'**un angle de rotation du mouvement de rotation de l'élément de liaison (10) après le placement du côté inférieur (18) de la tête d'élément de liaison (12) sur la pièce extérieure (40) est supérieur à 360°.

15. Procédé selon la revendication 13 ou 14, **caractérisé en ce qu'**après le placement du côté inférieur (18) de la tête d'élément de liaison (12), l'élément de liaison (10) n'est plus entraîné en rotation, jusqu'à ce que la rotation de l'élément de liaison (10) soit freinée jusqu'à l'arrêt.

16. Procédé selon la revendication 13 ou 14, **caractérisé en ce que** l'élément de liaison (10) est, après le placement du côté inférieur (18) de la tête d'élément de liaison (12) sur la pièce extérieure (40), tourné davantage d'un angle prédéfini.
